# FASCICULE DE BREVET EUROPEEN

(11) **EP 2 783 415 B1**
(45) Date de publication et mention de la délivrance du brevet: **10.02.2016**
(21) Numéro de dépôt: 12790559.4
(22) Date de dépôt: 23.11.2012
(51) Int. Cl.: H01M 10/0562, H01M 10/0585, H01M 10/04, H01M 4/38, H01M 4/48, H01M 4/505, H01M 4/525, H01M 10/0525

(54) **PROCEDE DE FABRICATION D'UNE BATTERIE TOUT SOLIDE**
VERFAHREN ZUR HERSTELLUNG EINER FESTKÖRPERBATTERIE
METHOD FOR THE PRODUCTION OF AN ALL-SOLID BATTERY

(30) Priorité: 24.11.2011 FR 1160740
(43) Date de publication de la demande: 01.10.2014
(73) Titulaire: Commissariat à l'Énergie Atomique et aux Énergies Alternatives, 75015 Paris (FR)
(72) Inventeur: MARTIN, Steve, F-38160 Saint Sauveur (FR); BEDJAOUI, Messaoud, F-38340 Voreppe (FR); POULET, Sylvain, F-38110 Saint Victor De Cessieu (FR); ROUCHOU, Jouhaiz, F-38120 Saint Egreve (FR)
(74) Mandataire: Ahner, Philippe
(86) Numéro de dépôt international: PCT/EP2012/073497
(87) Numéro de publication internationale: WO 2013/076260

(56) Documents cités:
- WO-A1-2010/035197
- WO-A2-2004/093223
- US-A1- 2009 057 136
- US-A1- 2010 239 907

## Description

### DOMAINE TECHNIQUE

L'invention concerne le domaine des batteries à électrolyte solide, appelées batteries tout solide. L'invention traite plus particulièrement de l'architecture de ce type de batterie et de leurs procédés de fabrication. L'invention peut être avantageusement utilisée pour la réalisation d'une batterie ou d'une microbatterie.

### ÉTAT DE LA TECHNIQUE ANTÉRIEURE

La spécificité d'une batterie ou microbatterie tout solide, au sens où on l'entend dans le présent document, tient au fait qu'elle comporte au moins un électrolyte solide intercalé entre deux électrodes. La superposition de ces trois couches, sous forme solide, forme une cellule électrochimique dont l'épaisseur est inférieure à environ 15 µm, par exemple de l'ordre d'une dizaine de microns, pour les microbatteries.

Lorsque des ions migrent entre les deux électrodes, plus précisément de l'anode vers la cathode, la cellule électrochimique produit de l'électricité. L'électrolyte est perméable à ce flux d'ions et isole électroniquement les électrodes afin d'éviter la mise en court-circuit de la cellule électrochimique.

L'électrolyte sous forme solide constitue un matériau isolant plus performant que sous forme liquide. Par exemple, un électrolyte réalisé à partir de LiPON solide est caractérisé par une isolation inférieure à 10⁻¹³S/cm.

Classiquement, les batteries sont fabriquées via des technologies empruntées à la microélectronique. Elles sont réalisées par dépôts successifs de couches minces, composées de matériaux dont les propriétés intrinsèques déterminent leur fonction. Les techniques de dépôt généralement utilisées sont de type : PVD, CVD, PECVD, Spin Coating, Electrodepositon, Sol-Gel, Spray coating, enduction... Plus particulièrement, l'électrolyte de ce type de batterie est réalisé par des techniques de dépôt sous vide, comme par exemple, la pulvérisation cathodique magnétron. Ce genre de technique permet de former des couches minces dont les épaisseurs sont inférieures au micromètre mais, pour plusieurs raisons décrites en partie ci-dessous, les épaisseurs des électrolytes solides sont actuellement supérieures au micromètre.

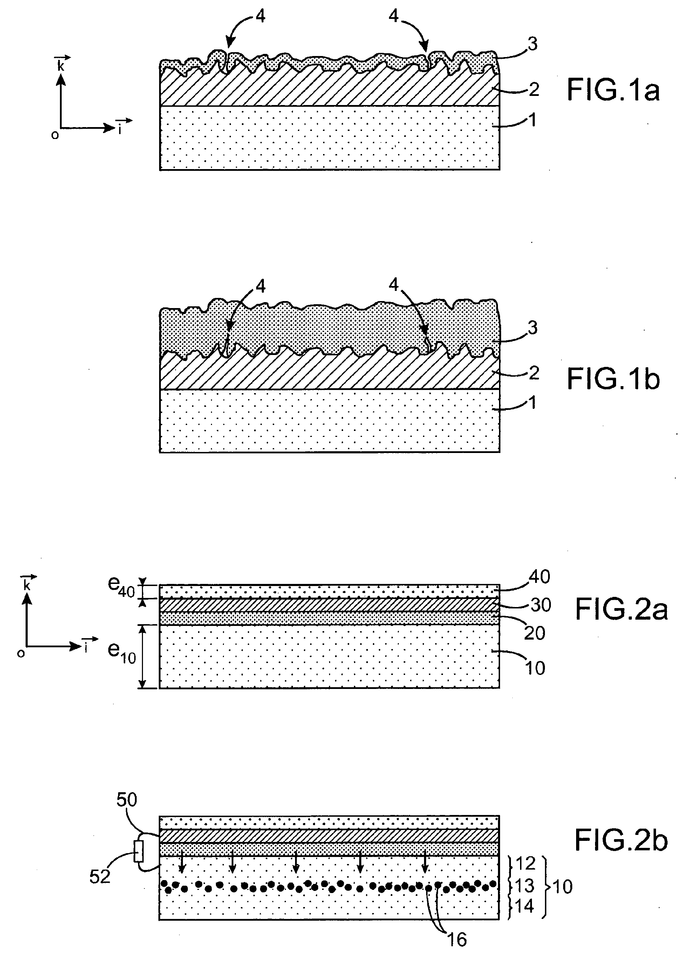

Les qualités de l'électrolyte, en tant qu'isolant électronique, dépendent entre autre de son homogénéité. Si elle comporte des discontinuités, comme par exemple des failles ou des défauts 4, des charges électriques peuvent se déplacer et traverser l'électrolyte 3 le long de ces défauts (figure 1a). Ce phénomène de fuites électroniques abaisse alors le niveau d'énergie stockée dans la batterie, on parle de phénomène d'autodécharge.

Ces défauts apparaissent notamment lors de la formation de la couche électrolyte 3. Celle-ci est déposée, selon l'une des techniques précédentes, sur une couche mince 2 utilisée ultérieurement comme électrode et reposant sur un substrat 1.

L'homogénéité d'une couche mince dépend entre autre, de l'état de surface de son support. Si celui-ci est rugueux ou comporte une forte topologie, de nombreux défauts sont créés lors des premiers instants du dépôt, plus précisément, lors des premiers nanomètres déposés.

Actuellement, la solution consiste à déposer suffisamment de matière pour recouvrir ou combler l'ensemble des défauts, et ainsi, limiter leurs effets (figure 1b).

Pour combler ou remplir les défauts des couches minces, il est nécessaire de déposer plus de matière. Or, l'état de surface ou la rugosité d'une couche mince est plus difficile à contrôler lorsque l'on augmente son épaisseur. Autrement dit, plus l'épaisseur d'une couche mince est élevée, plus sa rugosité de surface est grande (RMS > 1nm)(figure 1a).

Dans une batterie tout solide, les couches supérieures comportent donc plus de défauts. De ce fait, il est difficile d'empiler plusieurs couches fines et sans défauts, pour réaliser une batterie tout solide de faible épaisseur.

Actuellement, l'électrolyte de ce type de batterie doit avoir une épaisseur minimale, supérieure au micron, pour limiter les effets des défauts et isoler électroniquement l'anode et la cathode de façon satisfaisante. Or, la résistance interne d'une cellule électrochimique est proportionnelle à l'épaisseur de son électrolyte. De nos jours, les batteries ont donc des performances limitées lors de leur fonctionnement en régime de fortes puissances ou forts courants, en raison de l'épaisseur nécessaire d'électrolyte pour combler les défauts.

De plus, la capacité de stockage d'une batterie dépend de l'épaisseur de ces électrodes.

Augmenter la capacité de stockage d'une batterie nécessite d'augmenter l'épaisseur des électrodes, et donc de son électrolyte.

Il est donc difficile de réaliser une batterie ou microbatterie tout solide, ayant à la fois une forte capacité de stockage d'énergie (électrodes épaisses) et un fonctionnement viable en forte puissance (électrolyte fin).

Le document US2010/239907 divulgue un procédé de fabrication d'une batterie, comportant les étapes suivantes :
- la réalisation contre un substrat de couches à faible adhérences, d'une couche isolante, de couches collectrices de courant et de couches de matériau actif anodiques et cathodiques ;
- le dépôt d'une couche solide d'électrolyte;
- le dépôt de couches isolantes, d'aplanissement et de support ;
- l'enlèvement du substrat

### EXPOSÉ DE L'INVENTION

La présente demande a pour objectif d'apporter au moins une solution au problème suivant : comment réaliser une batterie, par exemple une microbatterie, tout solide, comportant un électrolyte fin et de bonne qualité en termes d'isolation électronique.

Pour cela, la présente invention porte sur un procédé de fabrication d'une batterie ou d'une microbatterie tout solide, comportant au moins les étapes suivantes :
- la réalisation contre un substrat en un matériau actif, d'au moins une couche solide d'électrolyte ;
- la réalisation d'une première électrode en contact avec l'électrolyte ;
- l'amincissement du substrat, tel qu'au moins une portion restante du substrat, en contact avec la couche solide d'électrolyte, forme une seconde électrode.

L'un des avantages de l'invention est donc de pouvoir réaliser des couches solides d'électrolyte homogènes, à partir d'épaisseurs plus faibles car, il n'est alors plus nécessaire de déposer une épaisseur supplémentaire d'électrolyte pour combler les défauts dus aux rugosités de surface de son support. Pour des performances équivalentes d'isolation électronique, la présente demande permet de déposer des épaisseurs d'électrolyte plus fines par rapport à l'état de la technique.

Selon la présente demande, un matériau actif désigne un matériau apte à former une électrode ou être utilisé en tant que telle, dans une batterie de type tout solide, et permettant l'insertion d'atomes ou d'ions.

Autrement dit, le substrat est de nature conductrice ou semiconductrice, et apte à intégrer des éléments extérieurs. Ces éléments peuvent être des atomes ou des ions, de type : H, ou Li, ou Be, ou Mg, ou Na ou K. Le substrat a également pour rôle de servir de support mécanique lors de la formation de la couche solide d'électrolyte, de la première électrode et éventuellement d'autres couches. Pour assurer cette fonction de support, l'épaisseur du substrat est de préférence supérieure à 10 µm.

Après l'étape d'amincissement, la partie du substrat en contact avec la couche solide d'électrolyte, formant la seconde électrode, peut être inférieure ou égale à environ un dixième de l'épaisseur initiale du substrat. Cette épaisseur est de préférence inférieure à 10 µm, par exemple comprise entre 10 nm et 9 µm ou entre 100 nm et 1 µm.

Le substrat peut être réalisé à partir d'au moins un des éléments suivants : silicium, germanium et carbone.

Une cellule électrochimique, selon la présente demande, comporte au moins la première électrode, la couche électrolyte et la seconde électrode. L'épaisseur de la cellule peut varier entre 100 nm et 100 µm.

La couche d'électrolyte peut comporter un ou plusieurs des matériaux ci-après : LiPON, LLTO, LISIPON, LISON.

La première électrode peut être fabriquée à partir d'un ou plusieurs des éléments suivants : lithium, LiCoO₂,LiMn₂O₄, V₂O₅,LiV₂O₅.

La cellule électrochimique peut être recouverte, au moins partiellement, par un matériau de recouvrement ou de protection, pouvant former une barrière de diffusion à la vapeur d'eau.

Le matériau de recouvrement peut soit être un matériau électriquement isolant, recouvrant entièrement la cellule électrochimique, ou bien un matériau électriquement conducteur.

Ainsi, le matériau électriquement isolant peut encapsuler la cellule électrochimique.

Avantageusement, le matériau électriquement conducteur ne recouvre pas totalement la cellule électrochimique afin de ne pas créer un court-circuit de la batterie ou microbatterie. Il peut éventuellement être maintenu contre la cellule électrochimique, par une couche intermédiaire en matériau conducteur anisotrope. Cette couche peut être de type ACF ou ACP.

Au moins deux différents vias sont réalisés dans le matériau de recouvrement, jusqu'à la première et seconde électrode. Les vias peuvent être remplis ou comblés, par un matériau électriquement conducteur.

Des reprises de contact électrique peuvent ensuite être soudées à au moins l'un des matériaux électriquement conducteurs ci-dessus.

Le procédé de fabrication peut comporter :
- une étape de formation d'une zone de fragilisation dans le substrat, comportant une ou plusieurs espèces ioniques et/ou atomiques, et délimitant la seconde électrode dans le substrat ;
- une étape de séparation de la seconde électrode d'une partie restante du substrat, par clivage, le long de cette zone de fragilisation.

La partie du substrat détachée de la seconde électrode, qui n'est donc plus en contact avec la couche solide d'électrolyte, peut avantageusement être de nouveau utilisée comme substrat, éventuellement après une étape de préparation d'une de ses faces.

La formation de la zone de fragilisation peut être réalisée avant ou bien après, la réalisation de la couche solide d'électrolyte sur le substrat en matériau actif ou apte à former une électrode. De préférence, l'étape de séparation est réalisée après la formation de l'électrolyte et de la première électrode.

Cette zone de fragilisation peut être réalisée par une technique d'implantation ionique ou atomique ou bien, par une technique de diffusion d'ions, provenant ou issus de la première électrode.

La technique d'implantation ionique peut consister à implanter à une même profondeur, des atomes ou des ions identiques comme par exemple des ions hydrogène.

La diffusion d'ions peut être réalisée par une mise en contact de la première électrode avec le substrat, par l'intermédiaire de moyens conducteurs de courant. Ces moyens peuvent comporter un fil conducteur et un générateur de tension électrique. De préférence, une tension électrique est appliquée entre ces deux éléments, afin de favoriser la migration d'ions de la première électrode dans le substrat.

Selon une variante, l'étape d'amincissement du substrat peut être réalisée par clivage et/ou polissage et/ou découpe laser et/ou découpe par jet d'eau et/ou gravure humide et/ou sèche.

Avantageusement, le polissage et/ou la découpe et/ou la gravure peut permettre d'adapter l'épaisseur du substrat à la future utilisation de la batterie. Par exemple, pour diminuer ou uniformiser la quantité d'énergie stockée dans plusieurs batteries réalisées selon l'invention, l'épaisseur de la seconde électrode peut être réduite à une même épaisseur pour l'ensemble des batteries.

Dans tous les cas, le substrat n'est pas complètement enlevé afin de participer au processus de stockage d'énergie électrochimique. Le fait de conserver l'interface entre l'électrolyte et le substrat, comme proposé ici, permet de conserver l'intégrité mécanique de la batterie lors de son chargement et/ou de son utilisation.

### BRÈVE DESCRIPTION DES DESSINS

D'autres détails et caractéristiques de l'invention apparaîtront de la description qui va suivre, faite en regard des figures annexées suivantes. Les parties identiques, similaires ou équivalentes des différentes figures portent les mêmes références de façon à faciliter le passage d'une figure à une autre.

Les différentes parties représentées sur les figures ne le sont pas nécessairement selon une échelle uniforme, pour rendre les figures plus lisibles. Les repères indiqués sur les figures sont orthogonaux.
Les figures 1a et 1b représentent le dépôt sous forme de couche, d'un électrolyte comportant des défauts, en raison de l'état de surface du support.
Les figures 2a à 2e représentent un premier procédé de fabrication d'une microbatterie tout solide selon l'invention.
Les figures 3a à 3d représentent un second procédé de fabrication d'une microbatterie tout solide selon l'invention.

### EXPOSÉ DÉTAILLÉ DE MODES DE RÉALISATION PARTICULIERS

Plusieurs procédés de fabrication d'une batterie ou microbatterie de type tout solide, sont présentés ci-après.

Un premier procédé de fabrication peut comporter une première étape consistant à préparer un substrat en un matériau actif ou apte à former une électrode, destiné à servir de support à la réalisation d'une cellule électrochimique d'une batterie tout solide. Une cellule électrochimique comporte au moins une anode et une cathode, séparées par un électrolyte. Une partie du substrat sera utilisée comme électrode de la cellule électrochimique.

Le substrat ou support 10 est réalisé à partir d'un matériau actif, c'est-à-dire, tel qu'au moins un atome ou ion peut s'insérer dans le matériau composant le substrat 10 et qu'une partie du substrat puisse être utilisée comme électrode. Sa structure peut éventuellement se déformer pour favoriser l'insertion d'ions ou d'atomes. Les atomes ou ions peuvent être du type : H, Li, Be, Mg, Na, K.

Le substrat 10 peut être réalisé à partir de matériau conducteur ou semi-conducteur, comme par exemple le silicium, le germanium ou le carbone.

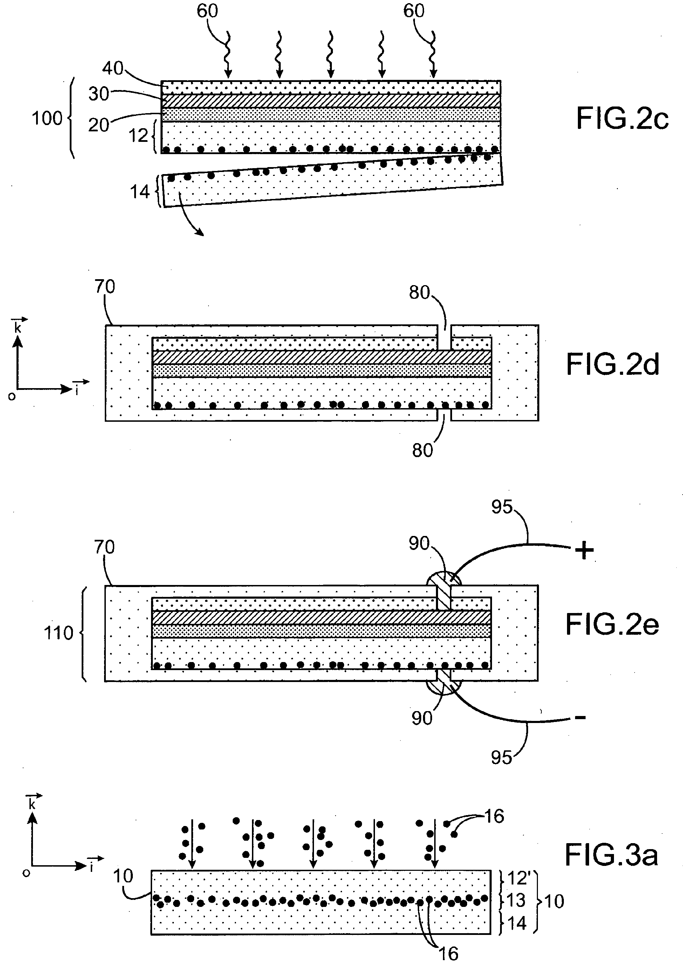

L'épaisseur e₁₀ du substrat 10 peut être supérieure à 10 µm, et avantageusement comprise entre 500 µm et 700 µm (figures 2a et 3a). Plus généralement, l'épaisseur du substrat peut correspondre aux épaisseurs des wafers, classiquement employés dans les domaines de la microélectronique. L'épaisseur eₓ d'un élément x est, selon le présent document, la distance séparant deux surfaces principales opposées dudit élément, selon une direction parallèle à l'axe (0;*̅K̅*̅) figurant sur les présentes figures.

Selon le mode de fabrication ici décrit, le substrat 10 est réalisé à partir de silicium et mis en forme de manière à former une couche, dont l'épaisseur e₁₀ est égale à 700µm (figure 2a). Au moins une face du substrat est traitée de sorte que sa surface présente une rugosité de surface ou RMS, comprise entre une dizaine et quelques nanomètres, de préférence inférieure à 10 ou 1 nanomètre.

Un électrolyte 20 est déposé sous forme de couche solide sur une face principale planarisée du substrat 10. La topologie ou rugosité de surface de cette face est inférieure à 10 nanomètres, afin de favoriser le dépôt homogène de l'électrolyte 20 sous forme de couche, ne comportant pas de défaut ou très peu de défauts. Ainsi, un électrolyte 20 peut recouvrir de façon homogène la face planarisée du substrat 10, pour une quantité minimum de matière déposée. Autrement dit, l'épaisseur e₂₀ de l'électrolyte 20, nécessaire pour recouvrir complètement la précédente face du substrat 10, est inférieure aux épaisseurs habituellement utilisées pour former un électrolyte d'une batterie ou microbatterie tout solide.

L'épaisseur e₂₀ de la couche électrolyte 20 peut être comprise entre 10 nm et 500 nm pour une batterie. Dans la présente demande, un électrolyte définit une couche capable d'isoler électroniquement deux électrodes et perméable à la diffusion d'au moins un ion ou atome entre lesdites électrodes.

L'électrolyte 20 peut être déposé selon plusieurs techniques de dépôt, par exemple une technique du type PVD, ou CVD, ou PECVD, ou Spin Coating, ou Electrodepositon, ou Sol-Gel, ou Spray coating, ou enduction...

L'électrolyte 20 peut être réalisé à partir d'au moins l'un des matériaux suivants : LiPON, LISIPON, LLTO, LISON.

L'épaisseur e₂₀ de l'électrolyte 20 en LiPON est, dans le cadre du présent exemple, égale à 500 nm.

Une seconde couche solide, destinée ultérieurement à être utilisée comme première électrode 30, par exemple comme anode, recouvre l'électrolyte 20. L'une des techniques de dépôt précédentes peut être employée pour cela. Les propriétés de cette couche sont similaires à celles du substrat, c'est-à-dire, électriquement conductrice et permettant la diffusion ou l'émission d'au moins un atome ou ion précédent. Elle peut être réalisée à partir d'au moins un des matériaux suivants : lithium, LiCoO₂, LiMn₂O₄, V₂O₅, LiV₂O₅. Son épaisseur peut être comprise entre 100 nm et 10 µm.

Selon le présent exemple, la première électrode 30 est réalisée à partir de lithium et déposée par évaporation thermique sous vide par effet Joule. L'épaisseur e₃₀ de lithium déposée est égale à 2 µm.

En raison du comportement hautement réactif du lithium avec l'eau, un bicouche 40 peut recouvrir de façon étanche la première électrode 30. Pour absorber les contraintes mécaniques, celui-ci peut par exemple comporter une première couche de parylène de quelques microns d'épaisseur, par exemple 5 µm, recouvrant la surface de la seconde électrode. Pour stopper la diffusion de la vapeur d'eau et former le bicouche 40, une seconde couche de titane de plusieurs centaines de nanomètres d'épaisseur, par exemple 500nm, peut recouvrir la première couche.

La première électrode 30 et le substrat 10 sont ensuite mis en contact électrique, par l'intermédiaire d'un dispositif conducteur. Celui-ci peut comporter un conducteur 50 et un générateur de tension électrique 52 (figure 2b). Une tension électrique est appliquée entre la première électrode 30 et le substrat 10 à l'aide de reprises de contact, afin de favoriser la diffusion des ions de la première électrode dans le substrat 10. Dans le présent exemple, les ions de lithium forment une zone implantée 13 dans le substrat 10. L'épaisseur e₁₃ de cette zone est comprise entre 1 et une dizaine de nanomètre.

L'insertion de ces ions crée localement une expansion volumique du substrat, qui est proportionnelle à la quantité d'ions insérée par unité de volume. La quantité et la profondeur d'insertion de ces éléments diffusants est proportionnelle à la valeur et la durée d'application de cette tension entre le substrat 10 et la première électrode 30. Les contraintes mécaniques créées par l'expansion volumique, fragilisent le substrat 10 au niveau de la zone de fragilisation 13.

Une contrainte mécanique peut être ensuite appliquée, au niveau de cette zone de fragilisation 13, pour réaliser un clivage (figure 2c). Cette contrainte peut être accomplie par des moyens émettant des ultrasons 60, comme représenté sur la figure 2c, ou bien à l'aide d'un jet d'eau ou d'un faisceau laser dirigé vers la zone fragilisée. La partie 14 du substrat 10 est alors séparée de la structure multicouche obtenue.

Selon une alternative, la face du substrat 10, opposée à la face en contact avec la couche d'électrolyte 20, peut être polie ou bien gravée jusqu'à une épaisseur souhaitée, correspondant aux gammes d'épaisseur précédentes. L'épaisseur du substrat 10 peut être comprise entre 500 µm et 700 µm.

La partie restante 12 du substrat 10 forme donc la seconde électrode d'une cellule électrochimique 100, comportant la couche d'électrolyte 20 et la première électrode 30 (figure 2c). L'épaisseur de cette cellule 100 peut être comprise entre 100 nm et 10 µm.

La cellule électrochimique 100 peut être immergée dans une résine 70, par exemple d'époxy, afin de la protéger de détériorations dues à l'environnement extérieur, comme par exemple des chocs mécaniques et/ou des agressions chimiques.

La résine 70 peut être percée sur une ou plusieurs faces (ainsi que le bicouche 40), de façon à créer au moins deux vias 80, formant des accès aux électrodes de la cellule électrochimique 100 (figure 2d).

Ces vias peuvent être remplis ou comblés par un matériau conducteur 90, comme par exemple une colle conductrice CE 3103 WLV fabriquée par HENKEL(figure 2e). Des soudures de fils de reprise de contact 95 peuvent être réalisées sur le matériau conducteur 90. Les fils 95 sont électriquement conducteurs et peuvent relier la batterie 110 à un dispositif électrique, non représenté sur les figures.

Un autre exemple de fabrication d'une batterie tout solide est décrit ci-après.

Selon une première étape, un substrat de composition et de forme similaire au substrat précédent 10, est soumis à une implantation ionique, par exemple d'ions hydrogène 16, pour former une zone de fragilisation 13 (figure 3a). Celle-ci délimite une seconde électrode 12' en contact avec la couche d'électrolyte 20, du reste du substrat 14.

Les couches 20, 30 et éventuellement 40 sont déposées sur le substrat 10 de la même façon que précédemment.

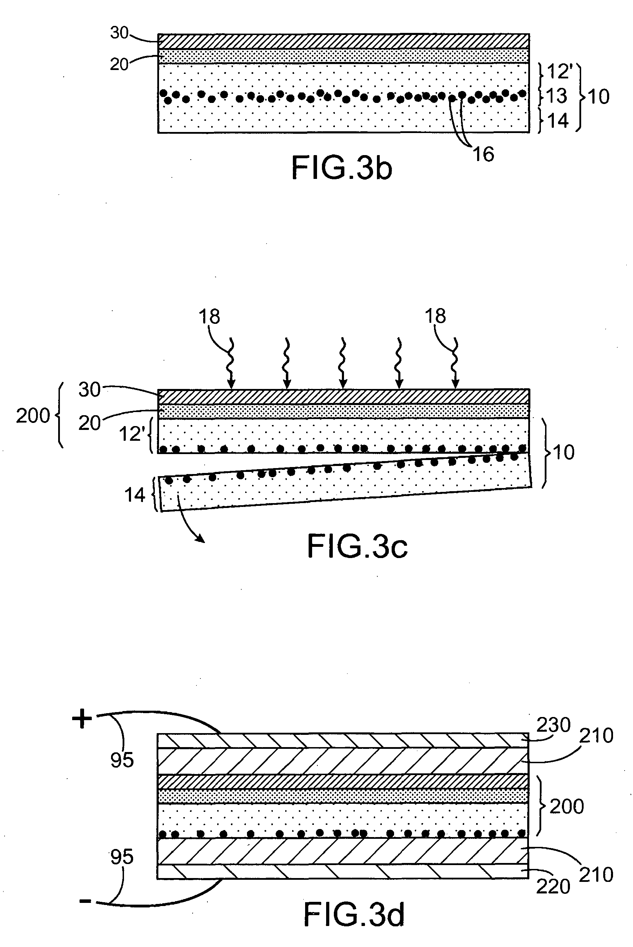

Selon une alternative, une couche de LLTO (Lithium Lantanate Titane Oxyde) de 500 nm d'épaisseur, peut être utilisée comme électrolyte 20, et une couche de LiCoO₂ de 2 µm d'épaisseur peut jouer le rôle de l'électrode 30 (figure 3b).

Cette structure multicouche est ensuite soumise à un traitement thermique 18 de plusieurs centaines de degrés, par exemple 600°C, afin de permettre le clivage du substrat 10 au niveau de la zone de fragilisation 13 et, éventuellement, cristalliser la première électrode 30 (figure 3c).

Les couches 12', 20 et 30 forment alors une cellule électrochimique 200. Celle-ci peut être au moins partiellement moulée ou encapsulée dans un matériau 210 (figure 3d). Le matériau 210 peut former une barrière de diffusion à la vapeur d'eau et être électroniquement conducteur, comme par exemple une colle conductrice anisotrope 210 CE 3126 fabriquée par HENKEL, de type ACF (« Anistropic Conducting Film ») ou bien une colle conductrice anisotrope du type ACP (« Anistropic Conducting Paste » ou encre).

Le matériau 210 peut permettre d'assurer un contact électrique et le maintien d'un premier élément conducteur 220 en vis-à-vis de la seconde électrode 12'.

De même, un second élément conducteur 230 peut être en contact électrique et maintenu en vis-à-vis de la première électrode 30. Ces éléments conducteurs peuvent être des feuilles d'aluminium. Le collage peut s'effectuer par pression à chaud.

Des soudures de fils de reprise de contact 230 peuvent être réalisées sur les matériaux conducteurs 220. Les fils 230 sont électriquement conducteurs et peuvent ainsi permettre de relier la batterie 200 à un dispositif électrique, non représenté sur les figures.

Une partie ou l'ensemble des étapes de fabrication précédentes peuvent être réalisées sous vide primaire, par exemple de 1 mbar, notamment pour limiter la présence d'eau dans la structure de l'une des batteries précédentes.

Avantageusement, les techniques de fabrication de la microélectronique peuvent être employées, afin de former une structure multicouche précédente (100, 200) au niveau d'un wafer, pouvant éventuellement être divisée par la suite en sous-structures multicouches.

Dans les deux modes de réalisation précédemment décrits, la partie 14 du substrat 10 peut être de nouveau utilisée après une étape de traitement de surface, pour former de nouveau une structure multicouche.

Les coûts de production peuvent ainsi être réduits.

Les procédés de fabrication décrits précédemment, d'une batterie ou microbatterie tout solide, présentent les avantages suivants :
- réduction de l'épaisseur d'électrolyte pour un meilleur comportement en puissance ;
- réduction de l'épaisseur globale du composant pour une meilleure flexibilité et intégration ;
- possibilité de réutiliser un même substrat plusieurs fois pour une réduction des coûts de production ;
- réduction du nombre d'étape de dépôt pour une réduction des coûts de production.

## Revendications

1. Procédé de fabrication d'une batterie, comportant au moins les étapes suivantes :
- la réalisation contre un substrat (10) en un matériau apte à former une électrode, d'au moins une couche solide d'électrolyte (20) ;
- la réalisation d'une première électrode (30) en contact avec l'électrolyte (20) ;
- l'amincissement du substrat (10) tel qu'au moins une portion restante du substrat (10), en contact avec la couche solide d'électrolyte (20), forme une seconde électrode (12, 12').

2. Procédé de fabrication selon la revendication précédente, l'épaisseur e_{12,12'} de la seconde électrode (12) étant inférieure ou égale à environ un dixième de l'épaisseur initiale e₁₀ du substrat (10), de préférence inférieure à 10 µm.

3. Procédé de fabrication selon la revendication 1 ou 2, comportant en outre une étape de dépôt d'au moins une couche (40) de protection, recouvrant au moins la première électrode (30).

4. Procédé de fabrication selon la revendication 3, la couche de protection (40) étant composée d'au moins un matériau étanche à la vapeur d'eau.

5. Procédé de fabrication selon l'une des revendications 1 à 4, comportant en outre, après l'étape d'amincissement du substrat (10), une étape d'encapsulation d'au moins une partie de l'ensemble comportant la seconde électrode (12, 12'), la couche solide d'électrolyte (20) et la première électrode (30), dans un matériau électriquement isolant (50).

6. Procédé de fabrication selon la revendication 5, comportant en outre, après l'étape d'encapsulation, une étape de réalisation d'au moins un premier contact électrique (90) relié électriquement à la première électrode (30) et un second contact électrique (90) relié électriquement à la seconde électrode (12, 12'), le premier et le second contacts électriques (90) traversant au moins le matériau électriquement isolant (50).

7. Procédé de fabrication selon l'une des revendications 1 à 6, comportant en outre, après l'étape d'amincissement du substrat (10), une étape de réalisation d'un matériau électriquement conducteur (220, 230) disposé contre la première électrode (30) et contre la seconde électrode (12, 12').

8. Procédé de fabrication selon la revendication 7, le matériau conducteur (220, 230) étant maintenu sur les électrodes (12, 12', 30) par une couche intermédiaire (210) en matériau conducteur anisotrope.

9. Procédé de fabrication selon l'une des revendications 1 à 8, comportant :
- une étape de formation d'une zone de fragilisation (13) dans le substrat (10), comportant une ou plusieurs espèces ioniques et/ou atomiques, et délimitant la seconde électrode (12, 12') dans le substrat (10) ;
- une étape de séparation de la seconde électrode (12, 12') d'une partie restante du substrat (14), par clivage, le long de cette zone de fragilisation (13).

10. Procédé de fabrication selon la revendication 9, l'étape de formation de la zone de fragilisation (13) dans le substrat (10) étant réalisée par une technique d'implantation ionique ou atomique ou bien, par une technique de diffusion d'ions issus de la première électrode (30).

11. Procédé de fabrication selon la revendication 10, la diffusion d'ions issus de la première électrode (30) étant réalisée par l'application d'une tension électrique entre la première électrode (30) et le substrat (10).

12. Procédé de fabrication selon l'une des revendications 1 à 8, l'étape d'amincissement du substrat (10) étant réalisée par clivage et/ou polissage et/ou découpe laser et/ou découpe par jet d'eau et/ou gravure humide et/ou sèche.

## Patentansprüche

1. Verfahren zur Herstellung einer Batterie, umfassend wenigstens die folgenden Schritte:
- das Herstellen wenigstens einer festen Elektrolytschicht (20) auf einem Substrat (10) aus einem Material, das dazu ausgelegt ist, eine Elektrode zu bilden;
- das Herstellen einer ersten Elektrode (30) in Kontakt mit dem Elektrolyten (20);
- das Abdünnen des Substrats (10) derart, dass wenigstens ein verbleibender Bereich des Substrats (10) in Kontakt mit der festen Elektrolytschicht (20) eine zweite Elektrode (12, 12') bildet.

2. Verfahren zur Herstellung nach dem vorhergehenden Anspruch, wobei die Dicke e_{12,12'} der zweiten Elektrode (12) kleiner oder gleich ungefähr einem Zehntel der Anfangsdicke e₁₀ des Substrats (10) ist, vorzugsweise kleiner als 10 µm.

3. Verfahren zur Herstellung nach Anspruch 1 oder 2, ferner umfassend einen Schritt des Aufbringens wenigstens einer Schutzschicht (40), die wenigstens die erste Elektrode (30) bedeckt.

4. Verfahren zur Herstellung nach Anspruch 3, wobei die Schutzschicht (40) aus wenigstens einem Material gebildet ist, das wasserdampfdicht ist.

5. Verfahren zur Herstellung nach einem der Ansprüche 1 bis 4, ferner umfassend, nach dem Schritt des Abdünnens des Substrats (10), einen Schritt des Einkapselns wenigstens eines Teils der Gesamtanordnung umfassend die zweite Elektrode (12, 12'), die feste Elektrolytschicht (20) und die erste Elektrode (30) in einem elektrisch isolierenden Material (50).

6. Verfahren zur Herstellung nach Anspruch 5, ferner umfassend, nach dem Schritt der Einkapselung, einen Schritt der Herstellung wenigstens eines ersten elektrischen Kontakts (90), der elektrisch mit der ersten Elektrode (30) verbunden ist, und eines zweiten elektrischen Kontakts (90), der elektrisch mit der zweiten Elektrode (12, 12') verbunden ist, wobei der erste und der zweite elektrische Kontakt (90) wenigstens das elektrisch isolierende Material (50) durchqueren.

7. Verfahren zur Herstellung nach einem der Ansprüche 1 bis 6, ferner umfassend, nach dem Schritt des Abdünnens des Substrats (10), einen Schritt der Herstellung eines elektrisch leitenden Materials (220, 230), das auf der ersten Elektrode (30) und auf der zweiten Elektrode (12, 12') angeordnet ist.

8. Verfahren zur Herstellung nach Anspruch 7, wobei das leitende Material (220, 230) auf den Elektroden (12, 12', 30) durch eine Zwischenschicht (210) aus anisotropem leitenden Material gehalten ist.

9. Verfahren zur Herstellung nach einem der Ansprüche 1 bis 8, umfassend:
- einen Schritt des Bildens einer Fragilisierungszone (13) in dem Substrat (10), umfassend eine oder mehrere lonen- und/oder Atomsorten, die die zweite Elektrode (12, 12') in dem Substrat (10) begrenzt;
- einen Schritt der Trennung der zweiten Elektrode (12, 12') von einem verbleibenden Teil des Substrats (14) durch Spaltung entlang dieser Fragilisierungszone (13).

10. Verfahren zur Herstellung nach Anspruch 9, wobei der Schritt des Bildens der Fragilisierungszone (13) in dem Substrat (10) durch eine lonen- oder Atomimplantationstechnik realisiert wird, oder auch durch eine Technik zur Diffusion von Ionen, die aus der ersten Elektrode (30) stammen.

11. Verfahren zur Herstellung nach Anspruch 10, wobei die Diffusion von Ionen, die aus der ersten Elektrode (30) stammen, durch Anlegen einer elektrischen Spannung zwischen der ersten Elektrode (30) und dem Substrat (10) realisiert wird.

12. Verfahren zur Herstellung nach einem der Ansprüche 1 bis 8, wobei der Schritt des Abdünnens des Substrats (10) durch Spalten und/oder Polieren und/oder Laserschneiden und/oder Wasserstrahlschneiden und/oder Feuchtgravieren und/oder Trockengravieren realisiert wird.

## Claims

1. Method for the production of a battery, including at least the following steps:
- production, against a substrate (10) made of a material able to form an electrode, of at least one solid electrolyte layer (20);
- production of a first electrode (30) in contact with the electrolyte (20);
- thinning of the substrate (10), such that at least a remaining proportion of the substrate (10), in contact with the solid electrolyte layer (20), forms a second electrode (12, 12').

2. A production method according to the previous claim, where thickness e_{12,12'} of the second electrode (12) is less than or equal to approximately one tenth of initial thickness e₁₀ of the substrate (10), and preferably less than 10 µm.

3. A production method according to claim 1 or 2, also including a step of deposition of at least one protective layer (40), covering at least the first electrode (30).

4. A production method according to claim 3, where the protective layer (40) consists of at least one material which is impervious to water vapour.

5. A production method according to one of claims 1 to 4, also including, after the step of thinning of the substrate (10), a step of encapsulation of at least a portion of the assembly including second electrode (12, 12'), the solid electrolyte layer (20) and the first electrode (30), in an electrically insulating material (50).

6. A production method according to claim 5, also including, after the step of encapsulation, a step of production of at least one first electrical contact (90) electrically connected to the first electrode (30) and one second electrical contact (90) electrically connected to the second electrode (12, 12'), where the first and second electrical contacts (90) traverse at least the electrically insulating material (50).

7. A production method according to one of claims 1 to 6, also including, after the step of thinning of the substrate (10), a step of production of an electrically conductive material (220, 230) positioned against the first electrode (30) and against the second electrode (12, 12').

8. A production method according to claim 7, where the conductive material (220, 230) is held on the electrodes (12, 12', 30) by an intermediate layer (210) made of an anisotropic conductive material.

9. A production method according to one of claims 1 to 8, including:
- a step of formation of an embrittlement zone (13) in the substrate (10), including one or more ionic and/or atomic species, delimiting the second electrode (12, 12') in the substrate (10);
- a step of separation of the second electrode (12, 12') from a remaining portion of the substrate (14), by splitting, along this embrittlement zone (13).

10. A production method according to claim 9, where the step of formation of the embrittlement zone (13) in the substrate (10) is produced by a technique of ion or atom implantation or, alternatively, by a technique of diffusion of ions derived from the first electrode (30).

11. A production method according to claim 10, where the diffusion of ions derived from the first electrode (30) is accomplished by the application of an electrical voltage between the first electrode (30) and the substrate (10).

12. A production method according to one of claims 1 to 8, where the step of thinning of the substrate (10) is implemented by splitting and/or polishing and/or laser cutting and/or cutting by water jet and/or wet and/or dry etching.
